# EUROPEAN PATENT APPLICATION

(11) **EP 3 501 776 A2**
(43) Date of publication of application: **26.06.2019**
(21) Application number: 18211412.4
(22) Date of filing: 10.12.2018
(51) Int. Cl.: B29C 33/30

(54) **GUIDE PILLAR FOR MOULDS OR DIES AND MOULD OR DIE PROVIDED WITH SUCH PILLARS**

(30) Priority: 21.12.2017 IT 201700147950 U
(71) Applicant: Silipigni, Lillo, 20060 Cassina De' Pecchi (IT); Silipigni, Susanna, 20121 Milano (IT)
(72) Inventor: Silipigni, Lillo, 20060 Cassina De' Pecchi (IT); Silipigni, Susanna, 20121 Milano (IT)
(74) Representative: Bonatto, Marco

(57) **Abstract**

The invention relates to a guide pillar (**1', 1", 1**^{III}, **1**^{IV}, **1**^{V}) for moulds (**5**) comprising at least two half-moulds (**5**A, **5**B) that open and close reversibly during the moulding operation. The guide pillar (**1'**, **1", 1**^{III}, **1**^{IV}, **1**^{V}) forms at least a first free end that forms an enlarged head (**9'**, **9"**, **9**^{III}, **9**^{IV}, **9**^{V}) connected to the rest of the pillar by a neck (**11', 11", 11**^{III}, **11**^{IV}, **11**^{V}) that is substantially narrower than the enlarged head. It prevents the column from becoming stuck in the corresponding sliding bushing when the mould is mounted.

## Description

### Field of the invention

The present invention relates to a guide pillar for moulds or dies and a mould or die provided with such pillars.
The mould or die can be used for example to moulds metal plates, pieces made of plastic material by injection or thermoforming, metallic components by die casting or forging.

### State of the art

The moulds or dies for example for machining metal plates or producing plastic or metal parts by injection moulding are currently mounted lifting the upper half-mould or upper die-half - also called cap or hat in the current technical jargon - and positioning it above the lower half-mould or die-half by means of an overhead crane, the half-moulds or die-half often having weights ranging from tens to hundreds of kilograms.

The upper half-moulds or die-halves are generally hung with chains.

Currently, workers position and hand guide the upper half-mould or upper die-half until inserting the guide pillars of the lower or upper half-mould/die-half into the corresponding slide bushings present on the other half-mould/die-half.

If during these manoeuvrings the upper half-mould/die-half is lowered when it is not correctly positioned with respect to the lower one, it happens not rarely that the sliding pillars enter the sliding holes not perfectly coaxial to them and become stuck therein, with severe risks of being damaged together with the entire mould/die.

In fact, once they are stuck together, it can be very complicated and laborious to free the moulds/dies and separate them again, all the more so if any pillar has bent or otherwise been deformed.

In fact the half-moulds/die-halves are currently freed with manual tools such as hammers, sledgehammers, levers, crowbars or hydraulic jacks.

In extreme cases, high precision moulds/dies can be irremediably damaged to the point they have to be replaced.

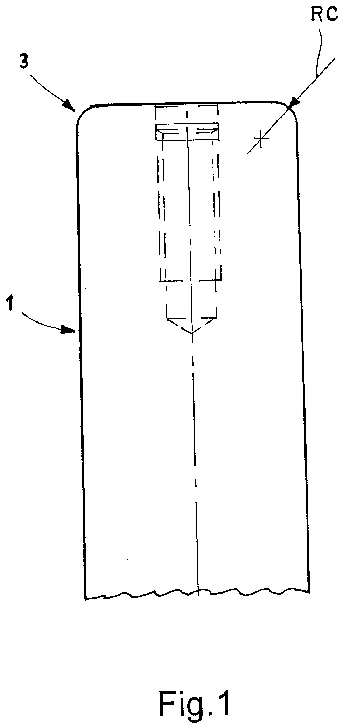

To free the moulds/dies more easily, a known procedure is to round the head end or free end of the current guide pillars, in particular by rounding their peripheral edge **3** as shown for example in Figure **1****.**

By way of indication, in a known pillar **1** with nominal diameter of **30** millimetres the rounded edge can have a radius of curvature RC of approximately **2-3** millimetres.

However, said rounded edge is not sufficient to avoid the aforesaid drawbacks, and according to the authors of the present invention it does not provide significant advantages and it neither appreciably reduces the risks that the half-moulds/die-halves will become stuck, nor does it make it easier to free them.

Equally ineffective is to make a conical taper at the peripheral edge of the guide pillars.

A purpose of the present invention is to overcome the aforementioned drawbacks and in particular to provide a guide pillar for moulds or dies and a mould or die less prone to become stuck when its guide pillars are inserted in the respective sliding holes, and easier to free once they are stuck

### Summary of the invention

In a first aspect of the invention, this purpose is achieved with a guide pillar having the features according to claim **1.**

In a second aspect of the invention, this purpose is achieved with a mould or die having the features according to claim **10.**

Further features of the invention are set forth in the dependent claims.

The advantages attainable with the present invention shall become more readily apparent, to the person skilled in the art, by the following detailed description of some particular, non-limiting examples of embodiment, illustrated with reference to the following schematic figures.

### List of Figures

Figure **1** shows the free end of a known guide pillar;

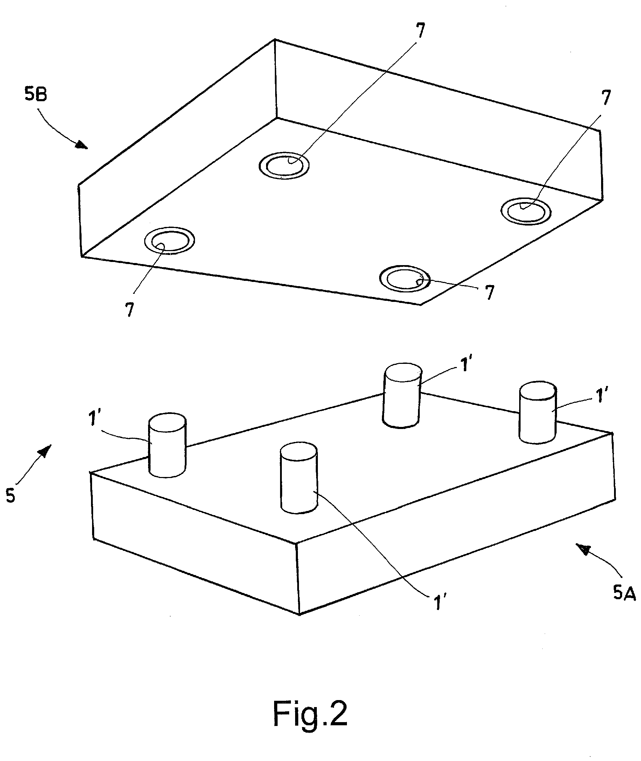

Figure **2** shows a perspective view of an open mould or open die, formed by two half-moulds or die-halves respectively, on which is mounted a plurality of guide pillars according to the present invention;
Figure **3** shows a side, partially sectioned view, of a guide pillar according to a first embodiment of the present invention;
Figure **4** shows a side view of a guide pillar according to a second embodiment of the present invention;
Figure **5** shows a side, partially sectioned view, of a guide pillar according to a third embodiment of the present invention and of the bushing in which it slides when the mould/die is operating;
Figure **6** shows a side view of a guide pillar according to a fourth embodiment of the present invention;
Figure **7** shows a side view of a guide pillar according to a fifth embodiment of the present invention.

### Detailed description

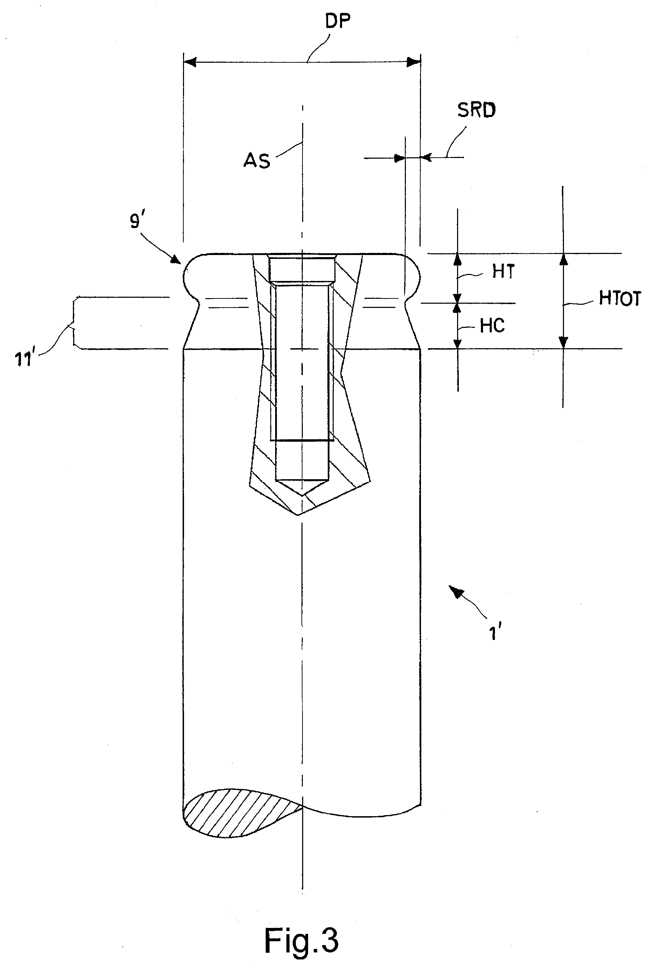

Figure **3** relates to a guide pillar for moulds or dies designated with the overall reference **1'.**

Preferably, each of the guide pillars **1', 1", 1**^{III}, **1**^{IV}, **1**^{V} have overall oblong shape and can be used to connect together, guide and cause to slide with respect to one another two or more half-moulds **5**A, **5**B of moulds **5** or or die-halves 5A, 5B of dies 5 for example for cold or hot machining metal plates - for example by blanking, deep drawing, bending or turning them - for injection moulding or die casting metals or plastic materials, or to forge metals.

The mould/die **5** can be provided with one or more guide pillars **1'**, **1", 1**^{III}, **1**^{IV}, **1**^{V}; preferably, it comprises a plurality thereof, for example four.

Each pillar **1', 1", 1**^{III}, **1**^{IV}, **1**^{V} can be fixed to and integral with the lower half-mould/die-half **5**A or with the upper half-mould/die-half **5**B.

The end of each pillar **1', 1", 1**^{III}, **1**^{IV}, **1**^{V} permanently fixed to the lower half-mould/die-half **5**A or to the upper half-mould/die-half **5**B is conventionally referred to, in the present description, as the "base" of the pillar.

During the moulding or pressing operation, each pillar **1', 1", 1**^{III}, **1**^{IV}, **1**^{V} slides within a corresponding sliding hole **7** made in the other half-mould/die-half, respectively **5**B or **5**A.

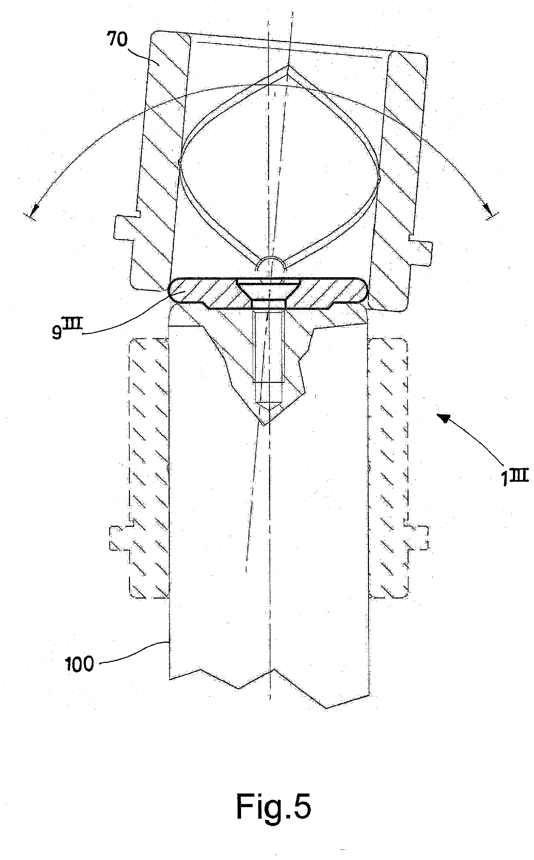

Each sliding hole **7** can be made for example in a bushing **70** embedded in the half-mould/die-half **5**B or **5**A (Figure **5**).

As shown in Figures **3-7** each sliding pillar **1', 1", 1**^{III}, **1**^{IV}, **1**^{V} can have overall cylindrical shape and at least its free end intended to be introduced in the other half-mould/die-half **5**B forms an enlarged head **9', 9", 9**^{III}, **9**^{IV}, **9**^{V} connected with the rest of the pillar by a neck **11', 11", 11**^{III}, **11**^{IV}, **11**^{V} substantially narrower than the enlarged head.

In the present description, the expression "from downstream to upstream" indicates a direction from the head **9', 9", 9**^{III}, **9**^{IV}, **9**^{V} towards the base of the pillar or otherwise towards the end of the pillar that is opposite, in axial direction, to said enlarged head.

As shown by way of example in Figures **3****,** **4****,** **5****,** **6****,** **7** the head **9', 9", 9**^{III}, **9**^{IV}, **9**^{V} can have a substantially flat top that occupies most - i.e. at least **50**% - of the surface area of largest cross section of the head itself, wherein the cross sections are referred to planes perpendicular to the longitudinal axis AS of the pillar **1', 1", 1**^{III}, **1**^{IV}, **1**^{V}.

Preferably, said flat top lies in a plane perpendicular to said axis AS.

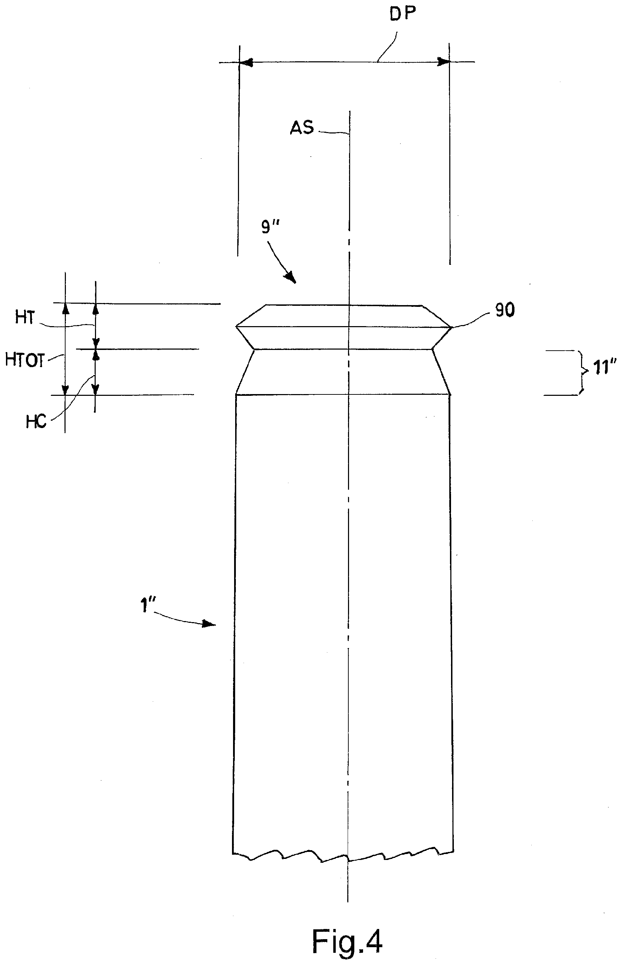

The head **9', 9", 9**^{III}, **9**^{V} can be delimited by a rounded edge without sharp edges - for example, as shown in Figure **3** - or by a rounded edge that ends with a sharp edge **90** (Figure **4**).

The rounded edges of the head **9', 9", 9**^{III}, **9**^{V} have minimum or average radii of curvature preferably between **1** and **10** millimetres, more preferably between **2** and **6** millimetres and still more preferably between **4** and **6** millimetres.

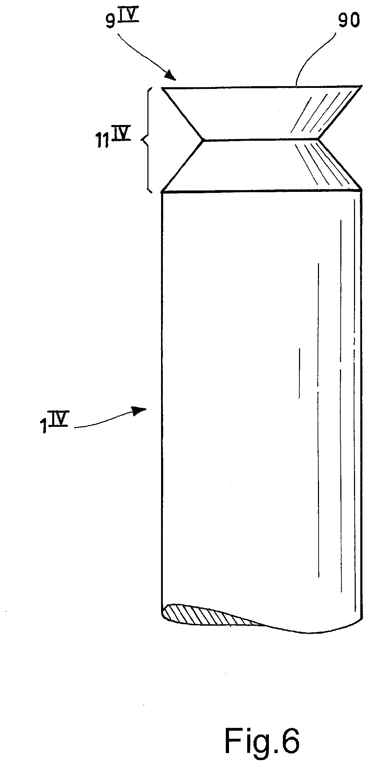

As shown for example in the embodiment of Figure **6****,** the head **9**^{IV} can also lack the rounded edge and be delimited by the neck **11**^{IV} by means of a peripheral edge **90** with sharp corner: in Figure **6** the head **9**^{IV} substantially has the shape of an upside-down cone frustum.

As in the embodiment of Figure **4****,** **6** the lower portion of the head **9", 9**^{IV} can have cone frustum or otherwise tapered shape.

As in the embodiments of Figure **3****,** **4****,** **6** also the neck **11', 11", 11**^{IV} can have cone frustum or otherwise tapered shape.

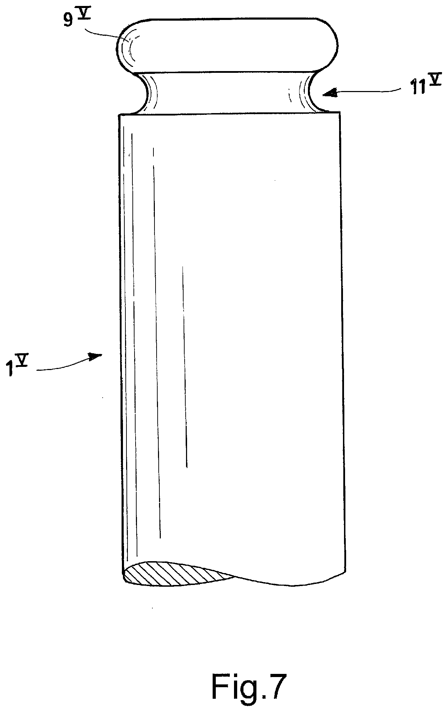

In other embodiments not shown herein, the lower portion of the head and the neck can have, for example, pyramid frustum, cylindrical, prismatic shape and be delimited by more various revolution surfaces or with radial symmetry; for example, in the embodiment of Figure **7** the neck **11**^{V} has the shape of an annular - or peripheral - throat with semi-circular or U-shaped cross sections.

The head **9', 9", 9**^{III}, **9**^{IV}, **9**^{V} has a height HT preferably between **1** and **20** millimetres, and more preferably between **2** and **10** millimetres or between **5** and **7** millimetres or between **3** and **6** and more preferably between **4** and **6** millimetres.

The neck **11', 11", 11**^{III}, **11^{IV}, 11**^{V} has a height HC preferably between **1** and **12** millimetres or between **2** and **8** millimetres, and more preferably between **2** and **5** millimetres.

The set of the head **9', 9", 9**^{III}, **9**^{IV}, **9**^{V} and of the related neck **11', 11", 11**^{III}, **11^{IV}, 11**^{V} has a height HTOT preferably between **3** and **15** millimetres or between **5** and **11** millimetres, and more preferably between **6** and **11** millimetres.

Preferably the head **9', 9", 9**^{III}, **9**^{IV}, **9**^{V} projects in radial direction with respect to the narrowest cross section of the neck **11', 11", 11**^{III}, **11^{IV}, 11**^{V} by a quantity SRD for example between **0.1** and **15** millimetres or between **0.5** and **5** millimetres or between **1.5** and **3** millimetres.

The maximum, nominal or average diameter DP of the pillar **1', 1", 1**^{III}, **1**^{IV}, **1**^{V} can for example be between **10** and **180** millimetres or between **25** and **100** millimetres.

The maximum diameter or the maximum cross section of the head **9', 9", 9**^{III}, **9**^{IV}, **9**^{V} can be equal respectively to the nominal or average diameter DP or to the nominal or average cross sections of the pillar **1', 1", 1**^{III}, **1**^{IV}, **1**^{V}.

The total height of a pillar **1', 1", 1**^{III}, **1**^{IV}, **1**^{V} can for example be between **20** and **1500** millimetres or between **80-1000** millimetres.

The portion of the pillar **1'**, **1", 1**^{III}, **1**^{IV}, **1**^{V} that extends between the neck **11', 11"** and the base of the pillar itself, i.e. the fust of the pillar, can have for example cylindrical, prismatic, parallelepiped or helical shape, and in case may be tapered.

The portion of the pillar **1', 1", 1**^{III}, **1**^{IV}, **1**^{V} that extends between the neck **11', 11"** and the base of the pillar itself preferably has an average, nominal or minimum diameter, or average, nominal or minimum cross sections that are substantially larger than the diameter or than the minimum cross section of the neck **11', 11".**

As in the embodiment of Figure **7****,** the head **9**^{V} and the neck **1**^{V} can also not be separated or marked by a sharp corner, but can be joined with an appropriately radiused fitting.

In the particular embodiment of Figures **3****,** **4****,** **6****,** **7** the head **9**^{III} and the neck are integrally obtained in a single piece from the rest of the guide pillar; however, as in the embodiment of Figure **5****,** the head **9**^{III} can also be formed by a first piece made separately and subsequently assembled to a second piece **100** that forms the rest of the pillar **1**^{III}, i.e. the fust of the pillar.

The heads **9', 9", 9**^{IV}, **9**^{V} are more resistant than the head **9**^{III} to accidental impacts, for example when manually handling the half-moulds/die-halves **5**A, **5**B hung from an overhead crane to mount them together.

The authors of the present invention have observed that the head **9', 9"** and the neck **11', 11"** positioned on the free ends of the guide pillars **1', 1"** previously described considerably reduce, when they do not eliminate altogether, the risks that the pillars **1', 1"** may become stuck and locked in the respective sliding holes **7** when two half-moulds/die-halves **5**A, **5**B are joined together and the pillars **1', 1", 1**^{III} are inserted in the holes **7** when they are not perfectly coaxial thereto.

These advantages are also appreciable with relatively tight hole-shaft couplings, for example with couplings H**5** with h**3** between the holes **7** and the pillars **1', 1".**

The embodiments described above are susceptible to numerous modifications and variants, without departing from the scope of the present invention.

For example a sliding pillar **1', 1", 1**^{III}, **1**^{IV}, **1**^{V} can have not only cylindrical overall shape, but also prismatic, parallelepiped or helical.

The head **9', 9", 9**^{III}, **9**^{IV}, **9**^{V} can also not have a flat top, but also for example a hemispherical or spherical cap shaped one.

The pillar cross sections can have not only circular shape or the shape of a regular convex polygon, but for example also shapes that are convex-concave polygonal, elliptical, oval, almond-like, half-moon like, star, arc, and/or variously lobed.

Every reference in this description to "an embodiment", "an embodiment example" means that a particular feature or structure described in relation to such embodiment is included in at least one embodiment of the invention and in particular in a specific variant of the invention as defined in a main claim.

The fact that such expressions appear in various passages of the description does not imply that they are necessarily referred solely to the same embodiment.

In addition, when a feature, element or structure is described in relation to a particular embodiment, it is observed that it is within the competence of the person skilled in the art to apply such feature, element or structure to other embodiments.

Numerical references that differ only by different superscript markers, e.g. **21', 21", 21**^{III}, unless otherwise specified indicate different variants of an element designated in the same way.

Moreover, all the details can be replaced by technically equivalent elements.

For example, the materials used, as well as their dimensions, can be of any type according to the technical requirements.

It must be understood that an expression of the type "A *comprises* B, C, D" or "A *is formed by* B, C, D" comprises and describes also the particular case in which "A *consists of* B, C, D".

The expression "A *comprises an element B",* unless otherwise specified, is to be construed as "*A comprises one or more elements B".*

The examples and lists of possible variants of the present application are to be construed as non-exhaustive lists.

## Claims

1. Guide pillar (**1**', **1**", **1**^{III}, **1**^{IV}, **1**^{V}) for moulds or dies (**5**) comprising at least two half-moulds or half-dies (**5**A, **5**B) that open and close reversibly during the moulding or pressing operation, where the guide pillar (**1', 1"**, **1**^{III}, **1**^{IV}, **1**^{V}) forms at least a first free end that forms an enlarged head (**9', 9", 9**^{III}, **9**^{IV}, **9**^{V}) connected to the rest of the pillar by a neck (11', **11", 11**^{III}, **11**^{IV}, **11**^{V}) that is substantially narrower than the enlarged head.

2. Pillar according to claim **1,** which forms a second end opposite in axial direction to the first free end, wherein the segment of the pillar that extends between the neck (**11', 11", 11**^{III}, **11**^{IV}, **11**^{V}) and the second end forms a fust.

3. Pillar according to claim **2,** wherein the fust has an overall shape selected among the following:
substantially cylindrical, prismatic, conical or cone frustum, pyramidal or pyramid frustum, parallelepiped, helical, and such shapes may be optionally tapered.

4. Pillar according to one or more of the preceding claims, wherein the head (**9', 9"**, **9**^{III}, **9**^{IV}, **9**^{V}) projects in radial direction with respect to the narrowest cross section of the neck **(11', 11", 11**^{III}, **11^{IV}, 11**^{V}) by a quantity (SRD) preferably comprised between **0,1** and **15** millimetres.

5. Pillar according to claim **4,** wherein one or more of the preceding claims, wherein the head (**9', 9**", **9**^{III}, **9**^{IV}, **9**^{V}) projects in radial direction with respect to the narrowest cross section of the neck (**11', 11"**, **11**^{III}, **11^{IV}, 11**^{V}) by a quantity (SRD) preferably comprised between **1,5** and **3** millimetres.

6. Pillar according to one or more of the preceding claims, wherein the maximum cross section of the enlarged head (**9', 9**", **9**^{III}, **9**^{IV}, **9**^{V}) is substantially no greater than the cross sections at least of one segment of the pillar immediately upstream of the neck (**11'**, **11", 11**^{III}, **11**^{IV}, **11**^{V}), where said cross sections are referred to ideal planes perpendicular to the longitudinal and/or sliding axis of the pillar (**1', 1"**, **1**^{III}, **1**^{IV}, **1**^{V}) itself.

7. Pillar according to one or more of the preceding claims, wherein the maximum cross section of the enlarged head (**9', 9", 9**^{III}, **9**^{IV}, **9**^{V}) is substantially no greater than the cross sections of the segment(s) of the pillar upstream of the neck (**11', 11"**, **11**^{III}, **11^{IV}, 11**^{V}) .

8. Pillar according to one or more of the preceding claims, wherein the neck (**11', 11"**, **11**^{III}, **11**^{IV}, **11**^{V}) is substantially narrower at least than a segment of the pillar immediately upstream of the neck (**11', 11"**, **11**^{III}, **11**^{IV}, **11**^{V}) .

9. Pillar according to one or more of the preceding claims, wherein the enlarged neck (**9', 9", 9**^{III}, **9**^{IV}, **9**^{V}) and/or the neck (**11', 11", 11**^{III}, **11^{IV}, 11**^{V}) are integrally obtained in a single piece from the rest of the guide pillar (**1', 1", 1**^{III}, **1**^{IV}, **1**^{V}).

10. Mould or die (**5**) comprising two or more half-moulds or die-halves (**5**A, **5**B) and at least one guide pillar (**1', 1", 1**^{III}, **1**^{IV}, **1**^{V}), wherein:
- each guide pillar (**1', 1", 1**^{III}, **1**^{IV}, **1**^{V}) is permanently fixed to one of the half-moulds or die-halves (**5**A, **5**B) and it is arranged for sliding at least in another one of the other half-moulds or die-halves (**5**B, **5**A) during the moulding or pressing operation;
- the two or more half-moulds (**5**A, **5**B) are arranged for approaching one to another and moving away one from another during the moulding or pressing operation, wherein at least one of which slides along at least a portion of the guide pillars (**1', 1", 1**^{III}, **1**^{IV}, **1**^{V}) so as to close and open the mould or die.

11. Mould or die (**5**) according to claim **10**, arranged for carrying out one or more of the following machining operations: moulding, for example blanking, deep drawing or bending, of metal plates, cold or hot, forging, injection moulding of metals or plastic materials, die casting, thermoforming, blow moulding.
